# EUROPÄISCHE PATENTSCHRIFT

(11) **EP 3 600 987 B1**
(45) Veröffentlichungstag und Bekanntmachung des Hinweises auf die Patenterteilung: **17.03.2021**
(21) Anmeldenummer: 18713178.4
(22) Anmeldetag: 20.03.2018
(51) Int. Cl.: B60T 8/36

(54) **MEMBRANVENTIL OHNE STÜTZRING UND OHNE STÜTZTELLER**
MEMBRANE VALVE WITHOUT SUPPORT RING AND SUPPORT PLATE
SOUPAPE À MEMBRANE SANS ANNEAU ET PLATE DE SUPPORT

(30) Priorität: 27.03.2017 DE 102017106555
(43) Veröffentlichungstag der Anmeldung: 05.02.2020
(73) Patentinhaber: KNORR-BREMSE Systeme für Nutzfahrzeuge GmbH, 80809 München (DE)
(72) Erfinder: WERNER, Kai, 71638 Ludwigsburg (DE); GREBE, Jan, 82319 München (DE)
(86) Internationale Anmeldenummer: PCT/EP2018/056977
(87) Internationale Veröffentlichungsnummer: WO 2018/177801

(56) Entgegenhaltungen:
- EP-A1- 0 352 522
- WO-A1-03/043863
- WO-A1-2010/012425
- DE-A1- 19 918 070
- DE-A1-102010 007 407
- DE-B3-102008 028 439

## Beschreibung

Die Erfindung betrifft ein Membranventil mit wenigstens Folgendem: Einer Elastomermembrane, welche über einen radial äußeren Randwulst in oder an einem Ventilgehäuse gehalten ist und welche mit einem Membranventilsitz zusammen wirkt, einer von einer ersten, vom Membranventilsitz weg weisenden Fläche der Elastomermembrane begrenzten und durch Druckmittel be- und entlastbaren ersten Steuerkammer, wobei bei einer Belastung der ersten Steuerkammer durch Druckmittel die Elastomermembrane gegen den Membranventilsitz gedrängt wird, einer von einer zweiten, von der ersten Fläche weg weisenden Fläche der Elastomermembrane begrenzten und durch Druckmittel be- und entlastbaren zweiten Steuerkammer, welche den Membranventilsitz umgibt, wobei bei einer Belastung der zweiten Steuerkammer durch Druckmittel die Elastomermembrane die Tendenz hat, vom Membranventilsitz abzuheben und dabei die zweite Steuerkammer mit einem Druckmittelströmungskanal verbunden wird, an welchem der Membranventilsitz endseitig ausgebildet ist, und wobei der Druckmittelströmungskanal, der Membranventilsitz und die Elastomermembrane in Bezug zu einer Axialrichtung koaxial zueinander angeordnet sind, gemäß dem Oberbegriff von Anspruch 1. Ein aus dem Stand der Technik stammender Beispiel ist in DE 10 2010 007407 A1 offenbart.

Die Erfindung betrifft weiterhin eine Drucksteuerventilanordnung zur Steuerung des Fluiddrucks in einer druckmittelbetätigten und schlupfgeregelten Bremsanlage eines Fahrzeugs beinhaltend ein solches Membranventil gemäß Anspruch 6 sowie eine schlupfgeregelte druckmittelbetätigte Bremsanlage eines Fahrzeugs mit wenigstens einer solchen Drucksteuerventileinrichtung gemäß Anspruch 11. Bremsschlupfgeregelte Bremssysteme wie ABS (Antiblockiersystem) verhindern ein Blockieren der Räder und tritt in Funktion, wenn zwischen einem Reifen und der Fahrbahn ein größerer Kraftschluss beansprucht wird, als übertragbar ist, d. h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Drucksenken, Druckhalten oder Drucksteigern nach Maßgabe des Radverhaltens und damit der Reibungsverhältnisse zwischen Reifen und Fahrbahn auf einen optimalen Schlupf eingestellt. ABS-Drucksteuerventilanordnungen finden bei Fahrzeugen wie beispielsweise Nutzfahrzeugen, Omnibussen, Sattelzugmaschinen wie auch bei Anhängern Verwendung. Drucksteuerventilanordnungen ohne Relaiswirkung verfügen meist über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen - Druckhalten, Drucksenken und Drucksteigern - durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Drucksteuerventile als 1-Kanal-Drucksteuerventile für Blockierschutzanlagen von Kraftfahrzeugen weisen innerhalb des Gehäuses je ein Membranventil als Einlass- oder Halteventil und als Auslassventil sowie je ein elektromagnetisches Steuerventil für das Membran-Halteventil und das Membran-Auslassventil auf. Die beiden Membranventile beinhalten jeweils eine mit dem Druck in einem Vorsteuerraum beaufschlagbare Membrane und die elektromagnetischen Steuerventile jeweils einen mittels einer elektrischen Magnetspule betätigbaren Magnetanker, welcher mit jeweils zwei Magnetventilsitzen zusammen wirkt. Im Betriebsmodus Druckhalten, d.h. wenn der von der Drucksteuerventilanordnung gerade eingestellte Bremsdruck aufrechterhalten werden soll, ist die Magnetspule des dem Membran-Halteventil zugeordneten elektromagnetischen Vorsteuerventils bestromt, wodurch der Magnetanker des Vorsteuerventils gegen die Wirkung von Federmitteln gegen den zugeordneten Magnetventilsitz dichtend gedrängt ist.

Ein gattungsgemäßes Membranventil und eine gattungsgemäße Drucksteuerventilanordnung sind beispielsweise aus DE 10 2008 035 372 A1 bekannt. Das aus DE 10 2008 035 372 A1 bekannte Membranventil weist typischerweise einen metallenen Stützring auf, welcher die Elastomermembrane in einem radial äußeren Bereich abstützt und die Elastomermembrane in ihrem zentralen, mit einem Ventilsitz zusammen wirkenden Bereich einen integrierten Stützteller aus Metall. Durch den Stützring und Stützteller verlängert sich die Lebensdauer der Elastomermembrane.

Der vorliegenden Erfindung liegt demgegenüber die Aufgabe zugrunde, ein Membranventil der oben beschriebenen Art derart weiter zu entwickeln, dass es bei hoher Lebensdauer möglichst günstig zu fertigen ist. Ebenso sollen eine ein solches Membranventil beinhaltende Drucksteuerventilanordnung für eine schlupfgeregelte Bremsanlage eines Fahrzeugs sowie eine schlupfgeregelte Bremsanlage eines Fahrzeugs mit wenigstens einer solchen Drucksteuerventilanordnung zur Verfügung gestellt werden.

Gemäß der Erfindung wird diese Aufgabe durch die Merkmale der Ansprüche 1, 7 und 12 gelöst.

### Offenbarung der Erfindung

Die Erfindung geht aus von einem Membranventil mit wenigstens Folgendem: Einer Elastomermembrane, welche über einen radial äußeren Randwulst in oder an einem Ventilgehäuse gehalten ist und welche mit einem Membranventilsitz zusammen wirkt, einer von einer ersten, vom Membranventilsitz weg weisenden Fläche der Elastomermembrane begrenzten und durch Druckmittel be- und entlastbaren ersten Steuerkammer, wobei bei einer Belastung der ersten Steuerkammer durch Druckmittel die Elastomermembrane gegen den Membranventilsitz gedrängt wird, einer von einer zweiten, von der ersten Fläche weg weisenden Fläche der Elastomermembrane begrenzten und durch Druckmittel be- und entlastbaren zweiten Steuerkammer, welche beispielsweise einen Druckmittelströmungskanal und/oder den Membranventilsitz in Umfangsrichtung gesehen umgibt, wobei bei einer Belastung der zweiten Steuerkammer durch Druckmittel die Elastomermembrane die Tendenz hat, vom Membranventilsitz abzuheben und dabei die zweite Steuerkammer mit dem Druckmittelströmungskanal verbunden wird, an welchem der Membranventilsitz endseitig ausgebildet ist und wobei der Druckmittelströmungskanal, der Membranventilsitz und die Elastomermembrane in Bezug zu einer Axialrichtung koaxial zueinander angeordnet sind. Dabei stellt die Axialrichtung auch eine Betätigungsrichtung der Elastomermembrane dar, um sie beispielsweise von dem Membranventilsitz abzuheben. Elastomermembrane bedeutet, dass die Membrane zumindest teilweise und bevorzugt vollständig aus einem Elastomer gefertigt ist.

Gemäß der Erfindung ist dann vorgesehen, dass ein Innendurchmesser des Druckmittelkanals 7,5mm bis 9,5 mm beträgt, und die Shore-Härte der Elastomermembrane wenigstens 40 Shore A beträgt, und die kleinste Dicke der Elastomermembrane wenigstens in einem zentralen Bereich, welcher sich in Bezug zu einer zur Axialrichtung senkrechten Radialrichtung gesehen innerhalb des Membranventilsitzes befindet wenigstens 30% des Innendurchmessers des Druckmittelkanals beträgt.

Die Anmelderin der vorliegenden Patentanmeldung hat herausgefunden, dass dann einerseits die Material- und Gestaltsteifigkeit der Elastomermembrane insbesondere in dem Bereich, welcher sich in Bezug zu einer zur Axialrichtung senkrechten Radialrichtung gesehen innerhalb des Membranventilsitzes befindet, groß genug und andererseits der Innendurchmesser des Druckmittelströmungskanals klein genug ist, dass die Elastomermembrane unter der bei Drucksteuerventilanordnungen üblichen Druckverhältnissen nicht in den Druckmittelströmungskanal durchknickt oder einbricht. Aber auch in dem radial äußeren Bereich der Elastomermembrane ist wegen der relativ hohen Materialsteifigkeit des Elastomermaterials eine derart hohe Steifigkeit gegeben, dass die Elastomermembrane dort weder einbricht noch einknickt. Dadurch sind eine hohe Lebensdauer sowie auch eine hohe Funktionssicherheit der Elastomermembrane gewährleistet.

Insbesondere kann mit den erfindungsgemäßen Maßnahmen die Elastomermembrane des Membranventils ohne einen zusätzlichen Stützring, welcher vorgesehen ist, einen radial äußeren Bereich der Elastomermembrane zu stützen und/oder ohne einen zusätzlichen, im zentralen Bereich der Elastomermembrane integrierten Stützteller ausgeführt werden, wobei der Stützring und der Stützteller aus einem von einem Elastomer verschiedenen Material und beispielsweise aus einem Metall gefertigt sind, wie beispielsweise in der oben genannten DE 10 2008 035 372 A1 beschrieben. Insbesondere wird dann das Membranventil gemäß einer bevorzugten Ausführungsform ohne einen solchen Stützring und/oder ohne einen solchen Stützteller ausgeführt. Dies resultiert in einer erheblichen Verringerung der Herstellkosten des Membranventils.

Durch die in den Unteransprüchen aufgeführten Maßnahmen sind vorteilhafte Weiterbildungen und Verbesserungen der Erfindung möglich.

Gemäß einer bevorzugten Ausführungsform sind den zentralen Bereich der Membrane infolge von Federkräften gegen den Membranventilsitz drängende Federmittel vorgesehen. Diese Federmittel sind bevorzugt derart ausgeführt, dass sie den zentralen Bereich der Elastomermembrane gegen den Membranventilsitz mit einer relativ geringen Kraft drängen, die gerade ausreicht, einen Ausgangszustand und eine Ausgangslage der Elastomermembrane zu definieren, wenn keine Betätigung durch das Druckmittel vorliegt.

Das Druckmittel wird vorzugsweise durch Druckluft oder durch Hydraulikflüssigkeit gebildet.

Gemäß einer Weiterbildung werden die erste Steuerkammer und die zweite Steuerkammer zusätzlich von dem Ventilgehäuse begrenzt, insbesondere die erste Steuerkammer von einem Ventilgehäusegrundkörper und/oder einem Ventildeckel und die zweite Steuerkammer von dem Ventilgehäusegrundkörper.

Die Erfindung betrifft auch eine Drucksteuerventilanordnung zur Steuerung des Fluiddrucks in einer druckmittelbetätigten und schlupfgeregelten Bremsanlage eines Fahrzeugs, wobei im Rahmen der Schlupfregelung der Bremsdruck in wenigstens einem Bremszylinder gesteigert, gehalten oder gesenkt wird, wobei in einem Gehäuse der Drucksteuerventilanordnung zwei Membranventile, ein Halte- oder Einlassmembranventil und ein Auslass-Membranventil sowie zwei von einer elektronischen Steuereinrichtung ansteuerbare elektromagnetische Vorsteuerventile zum Vorsteuern der Membranventile vorgesehen sind, wobei das Halte- oder Einlassmembranventil in einer Öffnungsstellung Druckmittel in den wenigstens einen Bremszylinder durchsteuert und in einer Schließstellung eine Zufuhr von Druckmittel in den wenigstens einen Bremszylinder unterbindet, und wobei das Auslass-Membranventil in einer Öffnungsstellung den wenigstens einen Bremszylinder mit einer Drucksenke verbindet und in einer Schließstellung die Verbindung zwischen dem wenigstens einen Bremszylinder und der Drucksenke sperrt.

Von dem Halte- oder Einlassmembranventil und dem Auslass-Membranventil wird dann wenigstens das Halte- oder Einlassmembranventil durch ein oben beschriebenes Membranventil gebildet. Zusätzlich kann auch das Auslass-Membranventil durch ein oben beschriebenes Membranventil gebildet werden.

Für den Fall, dass das Halte- oder Einlassmembranventil der Drucksteuerventilanordnung durch ein oben beschriebenes Membranventil gebildet wird, kann vorgesehen sein, die erste Steuerkammer des Halte- oder Einlassmembranventils mit einem Ausgang eines elektromagnetischen Vorsteuerventils verbunden ist, welches ein Einlass-Vorsteuerventil bildet, und dass die zweite Steuerkammer des Halte- oder Einlassmembranventils mit einem pneumatischen Kanal eines Betriebsbremsventils und der Druckmittelströmungskanal des Halte- oder Einlassmembranventils mit wenigstens einem druckmittelbetätigten Bremszylinder verbunden ist.

Für den Fall, dass das Auslass-Membranventil der Drucksteuerventilanordnung durch ein oben beschriebenes Membranventil gebildet wird, kann vorgesehen sein, dass die erste Steuerkammer des Auslass-Membranventils mit einem Ausgang eines elektromagnetischen Vorsteuerventils verbunden ist, welches ein Auslass-Vorsteuerventil bildet, und dass die zweite Steuerkammer des Auslass-Membranventils mit wenigstens einem druckmittelbetätigten Bremszylinder und der Druckmittelströmungskanal des Auslass-Membranventils mit einer Drucksenke oder mit einem Druckmittelreservoir verbunden ist.

Gemäß einer Weiterbildung können die beiden elektromagnetischen Vorsteuerventile je eine Magnetspule sowie mit Magnetventilsitzen zusammen wirkende und durch Bestromung der Magnetspulen gegen Federmittel betätigbare Magnetanker aufweisen.

Weiterhin umfasst die Erfindung auch eine schlupfgeregelte druckmittelbetätigte Bremsanlage eines Fahrzeugs mit wenigstens einer oben beschriebenen Drucksteuerventileinrichtung, insbesondere eine bremsschlupfgeregelte Bremsanlage, wobei im Rahmen der Schlupfregelung der Bremsdruck in wenigstens einem Bremszylinder gesteigert, gehalten oder gesenkt wird. Mit anderen Worten umfasst die Erfindung insbesondere auch eine bremsschlupfgeregelte druckmittelbetätigte Bremsanlage eines Fahrzeugs, wobei die Bremsschlupfregelung durch ein ABS oder eine Gleitschutzeinrichtung gebildet wird.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Prinzipdarstellung einer ABS-Bremsanlage als allgemeines Schema einer 4S/4K-ABS-Bremsanlage eines Fahrzeugs;
- Fig.2a: eine schematische Darstellung einer einen Bremszylinder ansteuernden Drucksteuerventilanordnung im Zustand Drucksteigern;
- Fig.2b: eine schematische Darstellung der Drucksteuerventilanordnung von Fig. 2a im Zustand Drucksenken;
- Fig.2c: eine schematische Darstellung der Drucksteuerventilanordnung von Fig. 2a im Zustand Druckhalten;
- Fig.3: eine vergrößerte Darstellung eines Membranventils der Drucksteuerventilanordnung von Fig.2a.

### Beschreibung des Ausführungsbeispiels

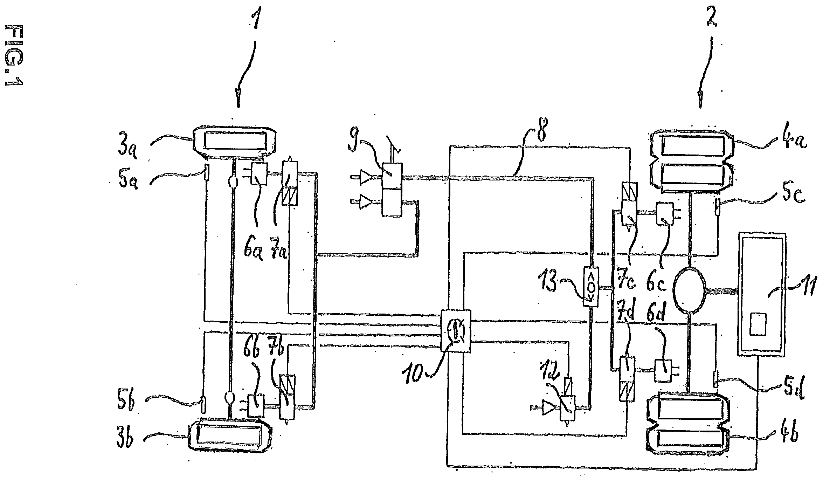

Gemäß **Fig.1** weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a -5d sowie vier Drucksteuerventilanordnungen 7a -7d zur Verfügung stehen. Die Drucksteuerventilanordnungen 7a - 7d dienen der Ansteuerung von jeweils zugeordneten Bremszylindern 6a - 6d. Über eine sich verzweigende pneumatische Bremsdruckleitung 8 stehen alle Drucksteuerventilanordnungen 7a -7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a - 7d passierend an die den Rädern 3a, 3b sowie den Rädern 4a, 4b zugeordneten Bremszylindern 6a - 6d weitergeleitet wird.

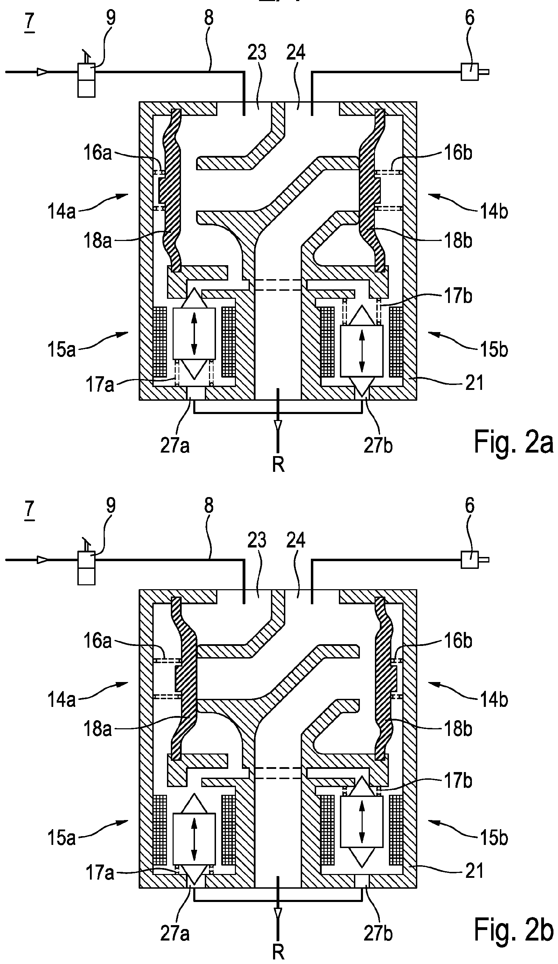

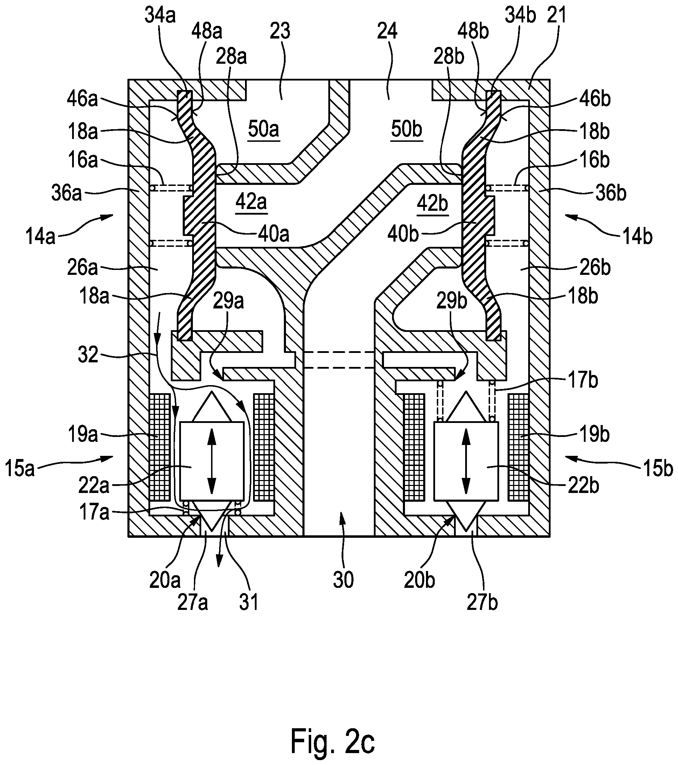

Die Drucksteuerventilanordnungen 7a - 7d sind über integrierte, in **Fig.2a, Fig.2b** und **Fig.2c** gezeigte Elektromagnetventile 15a, 15b ansteuerbar und sind zu diesem Zwecke mit einer zentralen elektronischen Steuereinheit, insbesondere einer ABS-Steuereinrichtung 10 elektrisch verbunden.

Eingangsseitig steht die elektronische Steuereinheit 10 mit den vier die Radgeschwindigkeiten ermittelnden Drehzahlsensoren 5a - 5b in Verbindung. Im Falle des Blockierens eines Rades 3a - 3d, d.h. bei einem Überschreiten eines optimalen Bremsschlupfes wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a -7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß **Fig.2a** im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, durch Federelemente 17a, 17b in der einen von zwei Schließrichtungen vorgespannte Elektromagnetventilen 15a, 15b. Elastomermembranen 18a, 18b der Membranventile 14a und 14b sind jeweils durch Federelemente 16a, 16b in die Schließrichtung belastet und werden über die jeweils zugeordneten Elektromagnetventile 15a und 15b vorgesteuert. Von den Membranventilen 14a, 14b ist das eine ein Halte- oder Einlass-Membranventil 14a und das andere ein Auslass-Membranventil 14b.

Ein Gehäuse 21 der Drucksteuerventilanordnung 7 weist weiterhin einen Druckmittelanschluss 23 zur Druckbeaufschlagung und/oder Druckentlastung der Drucksteuerventilanordnung 7 sowie einen in Arbeitsanschluss 24 zum Anschluss des Bremszylinders 6 auf. Der Druckmittelanschluss 23 ist, wie **Fig.2a** bis **Fig.2c** zeigen, über die Bremsdruckleitung 8 mit einem pneumatischen Kanal des Fuß- oder Betriebsbremsventil 9 der druckmittelbetätigten Bremseinrichtung verbunden und wird entsprechend einer Betätigung des Fußbremsventils 9 be- oder entlüftet.

Wie am besten im Detail aus **Fig.2c** hervorgeht, weisen die beiden Elektromagnetventile 15a, 15b jeweils eine Magnetspule 19a, 19b auf, wobei durch Bestromung der Magnetspulen 19a, 19b mit Magnetventilsitzen 20a, 20b bzw. 29a, 29b der Elektromagnetventile 15a, 15b zusammen wirkende Magnetanker 22a, 22b als Ventilschließglieder betätigt werden. Dabei wirken die Magnetanker 22a, 22b je nach Schaltstellung mit jeweils zwei Magnetventilsitzen 20a, 20b bzw. 29a, 29b zusammen.

Dabei werden die Magnetanker 22a, 22b infolge der Vorspannung durch die Federmittel 17a, 17b im unbestromten Zustand der Magnetspulen 19a, 19b gegen die oberen Magnetventilsitze 29a, 29b gedrückt. Die Federmittel 17a, 17b spannen die Magnetanker 22a dann insbesondere in eine vom unteren Magnetventilsitz 20a abgehobene Lage vor, in welcher ein Strömungsquerschnitt freigegeben wird, der eine im Gehäuse 21 ausgebildete Kammer 26a mit einer Drucksenke 27a in Form eines Entlüftungsanschlusses in Verbindung bringt. Bei Bestromung der Magnetspulen 19a, 19b werden die Magnetanker 22a, 22b gegen die Wirkung der Federmittel 17a, 17b gegen die unteren Magnetventilsitze 20a, 20b gedrängt.

Die Kammer 26a wird mit dem Druckmittelanschluss 23 und damit mit dem Fußbremsventil 9 verbunden, wenn die Elastomermembrane 18a des Halte- oder Einlassmembranventils 14a von seinem zugeordneten Membranventilsitz 28a abhebt. Der Arbeitsanschluss 24 und damit der Bremszylinder 6 gerät mit einer weiteren Drucksenke 30 in Verbindung, wenn die Ealstomermembrane 18b des Auslass-Membranventils 14b von ihrem zugeordneten Membranventilsitz 28b abhebt.

Die Drucksteuerventilanordnung 7 ist in **Fig.2a** in ihrer Offenstellung gezeigt, bei der ein Druckaufbau zum angeschlossenen Bremszylinder 6 erfolgt (Drucksteigern). Hierbei wird keines der Elektromagnetventile 15a und 15b elektrisch angesteuert. In der gezeigten Stellung drückt die vom Fußbremsventil 9 kommende Druckluft das Halte- oder Einlassmembranventil 14a auf, d. h. aufgrund des an der rechten Wirkfläche der Elastomermembrane 18a vom Anschluss 23 her anstehenden Bremsdrucks wird diese vom Membranventilsitz 28a gegen die Wirkung der Federmittel 16a abgehoben. Durch das in seiner federbelasteten Grundstellung gegen den oberen Magnetventilsitz 29a geschlossene Elektromagnetventil 15a wird verhindert, dass das zugeordnete Halte- oder Einlassmembranventil 14a wieder verschlossen wird. Durch das in seiner federbelasteten Grundstellung geöffnete zweite Elektromagnetventil 15b steht der vom Fußbremsventil 9 kommende Bremsdruck an der Membrane 18b des Auslass-Membranventils 14b von rechts heran und drängt diese gegen ihren Membranventilsitz 28b, wodurch das das Auslass-Membranventil 14b verschlossen bleibt. Somit durchläuft die unter Bremsdruck stehende Druckluft ungehindert die Drucksteuerventilanordnung 7. In diesem die Druckluft durchleitenden Zustand befindet sich die Drucksteuerventilanordnung 7 auch dann, wenn keine ABS-Regelung erfolgt.

Ausgehend von dem in **Fig.2a** gezeigten Zustand (Drucksteigern) ist zum Konstanthalten des Bremsdrucks in einem Bremszylinder 6a bis 6d (Druckhalten) gemäß **Fig.2c** lediglich die Magnetspule 19a des Elektromagnetventils 15a zu bestromen.

Das Elektromagnetventil 15b bleibt hingegen unbestromt, wodurch das auslassseitige Membranventil 14b weiterhin geschlossen bleibt. Durch Bestromen der Magnetspule 19a des Elektromagnetventils 15a hebt dessen Magnetanker 22a vom oberen Magnetventilsitz 29a gegen die Wirkung der Federmittel 17a ab und drängt gegen den unteren Magnetventilsitz 20a. Dann steht der vom Fußbremsventil 9 über das zunächst noch offene Halte- oder Einlassmembranventil 14a herangeführte Bremsdruck in einer im Gehäuse 21 ausgebildeten ersten Steuerkammer 26a an und kann auf die Elastomermembrane 18a gemäß **Fig.2c** auch von der linken Seite her wirken. Nun ist der Druck auf der rechten Fläche 48a und linken Fläche 46a der Elastomermembrane 18a des Halte- oder Einlassmembranventils 14a gleich groß. Da aber die erste oder linke Fläche 46a der Elastomermembrane 18a größer ist, wird das Halte- oder Einlassmembranventil 14a geschlossen, d.h. die Elastomermembrane 18a wird gegen den Membranventilsitz 28a gedrängt. Die Drucksteuerventilanordnung 7 verschließt zum Konstanthalten des Drucks also die vom Fußbremsventil 9 zum Bremszylinder 6 verlaufende pneumatische Bremsdruckleitung 8.

Dabei steht der vom Fußbremsventil 9 herangeführte Bremsdruck aber weiterhin in der nun geschlossenen ersten Steuerkammer 26a an. Im Bereich des unteren Magnetventilsitzes 20a, gegen welchen der Magnetanker 22a des Elektromagnetventils 15a im bestromten Zustand der Magnetspule 22a gedrängt ist, ist beispielsweise ein Bypasskanal 31 ausgebildet, durch welche eine Druckluftströmung von der ersten Steuerkammer 26a entlang zumindest eines Teils der Magnetspule 19a des dem Membran-Halteventil 14a zugeordneten Elektromagnetventils 15a bis zur Drucksenke 27a strömen kann. Diese Druckluftströmung kann dann die unter Bestromung stehende Magnetspule 19a kühlen.

Der Bypasskanal 31 überbrückt den durch den am Magnetventilsitz 20a dichtend anliegenden Magnetanker 22a verschlossenen Strömungsquerschnitt und ermöglicht eine Druckluftströmung entlang wenigstens eines Teils der Magnetspule 19a, bevorzugt entlang deren gesamter Längserstreckung und parallel zu ihr, wie durch den Pfeil 32 in **Fig.2c** angedeutet ist.

Andererseits ist der Bypasskanal 31 insbesondere hinsichtlich seines Querschnitts derart ausgeführt, dass der Volumenstrom der Druckluftströmung durch den Bypasskanal 31 kleiner als ein oberer Grenz-Volumenstrom ist, durch welchen das HalteMembranventil 14a von seiner Schließstellung wieder in seine Öffnungsstellung geschaltet werden könnte. Denn bedingt durch die den Bypasskanal 31 durch- und zur Drucksenke 27a strömende Druckluft sinkt der Druck in der ersten Steuerkammer 26a und damit auch der Druck auf die linke oder erste Fläche 46a der Elastomermembrane 18a des Halte- oder Einlassmembranventils 14a. Dadurch wird verhindert, dass der Volumenstrom der Bypass-Strömung so groß wird, dass sie Einfluss auf den (Schalt-) Zustand des Halte- oder Einlassmembranventils 14a zu nehmen vermag. Denn der Volumenstrom der durch den Bypasskanal 31 strömenden Bypass-Strömung soll ausschließlich der Kühlung der Magnetspule 19a dienen. Der Bypasskanal 31 ist bevorzugt am Umfang des Magnetventilsitzes 20a ausgebildet und parallel zur Mittelachse des Magnetankers 22a bzw. zur Spule 19a, und lässt trotz gegen den Magnetventilsitz 20a dichtenden Magnetanker 36a einen gewissen Strömungsquerschnitt offen. Alternativ kann aber auch auf einen solchen Bypasskanal 31 verzichtet werden.

Gemäß **Fig.2b** wird ein Druckabbau (Drucksenken) im Bremszylinder 6 dadurch erzielt, dass beide Elektromagnetventile 15a und 15b bestromt werden. Für das Elektromagnetventil 15a und das zugeordnete Halte- oder Einlassmembranventil 15a gilt das vorstehend zum Druckhalten Beschriebene. Hingegen wird der Magnetanker 22b des anderen Elektromagnetventils 15b wegen der Bestromung seiner Magnetspule 19b gegen die Wirkung der Federmittel 17b vom unteren Magnetventilsitz 20b abgehoben und gegen den oberen Magnetventilsitz 29b gedrängt. Deshalb sinkt der Druck in der Kammer 26b, so dass der vom Bremszylinder 6 kommende Druck die Membrane 18b des Auslass-Membranventils 14b vom Membranventilsitz 28b abheben kann, so dass der Arbeitsanschluss 24 und damit der Bremszylinder 6 zum Entlüften mit der Drucksenke 30 oder mit einem Druckmittelreservoir R verbunden wird.

Zusammengefasst steuert daher das Halte- oder Einlassmembranventil 14a in einer Öffnungsstellung **(****Fig.2a****)** Druckmittel in den Bremszylinder 6 durch (Drucksteigern) und unterbindet in einer Schließstellung **(****Fig.2b****)** eine Zufuhr von Druckmittel in den Bremszylinder 6 (Druckhalten). Weiterhin verbindet das Auslass-Membranventil 14b in einer Öffnungsstellung **(****Fig.2b****)** den Bremszylinder 6 mit einer Drucksenke 30, R (Drucksenken) und sperrt in einer Schließstellung **(****Fig.2a****)** die Verbindung zwischen dem Bremszylinder 6 und der Drucksenke 30, R (Druckhalten).

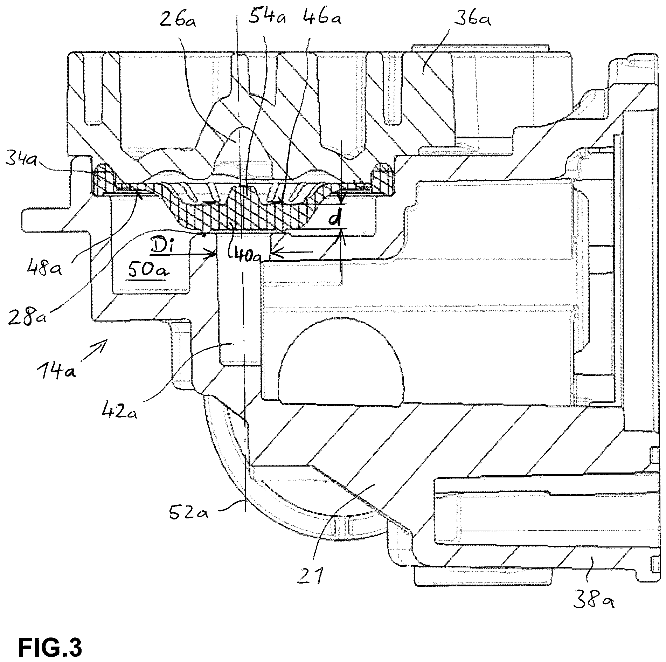

In **Fig.3** ist das als Einlass- oder Halteventil der Drucksteuerventilanordnung 7 vorgesehene Membranventilen 14a detaillierter und konkreter dargestellt. Dessen Elastomermembrane 18a weist einen radial äußeren Randwulst 34a auf, welcher bevorzugt dadurch im Gehäuse 21 gehalten ist, dass der radial äußere Randwulst 34a zwischen einem äußeren Ventildeckel 36a und einem Ventilgehäusegrundkörper 38a des Ventilgehäuses 21 geklemmt ist. Das Ventilgehäuse 21, welches die Ventile 14a, 14b, 15a, 15b haust, beinhaltet daher den Ventilgehäusegrundkörper 38a sowie die äußeren Ventildeckel 36a, 36b, welche die Membranventile 14a, 14b deckeln.

Der zentrale Bereich 40a der Elastomermembrane 18a wirkt mit dem Membranventilsitz 28a eines Druckmittelströmungskanals 42a des Membranventils 14a zusammen. Der Membranventilsitz 28a ist hier beispielsweise an einem Ende des Druckmittelströmungskanals 42a randseitig ausgebildet, welcher einen Innendurchmesser Di aufweist. Weiterhin ist die von einer ersten, vom Membranventilsitz 28a weg weisenden Fläche 46a der Elastomermembrane 18a und von dem Ventildeckel 36a begrenzte und durch Druckmittel be- und entlastbare erste Steuerkammer 26a des Membransitzventils 14a vorgesehen, wobei bei einer Belastung der ersten Steuerkammer 26a durch Druckmittel die Elastomermembrane 18a gegen den Membranventilsitz 28a gedrängt wird. Darüber hinaus ist auch eine von der zweiten, von der ersten Fläche 46a weg weisenden Fläche 48a der Elastomermembrane 18a sowie vom Ventilgehäusegrundkörper 38a begrenzte und durch Druckmittel be- und entlastbare zweite Steuerkammer 50a vorhanden, welche den Membranventilsitz 20a und den Druckmittelströmungskanal 42a zumindest endseitig umgibt, wobei bei einer Belastung der zweiten Steuerkammer 50a durch Druckmittel die Elastomermembrane 18a die Tendenz hat, vom Membranventilsitz 28a abzuheben und dabei die zweite Steuerkammer 50a mit dem Druckmittelströmungskanal 42a verbunden wird. Diese Situation ist auch in **Fig.2a** im Zusammenhang mit dem Zustand "Drucksteigern" dargestellt und oben ausführlich beschrieben.

Das den zentralen Bereich 40a der Elastomermembrane 18a infolge von Federkräften gegen den Membranventilsitz 20a drängende Federelement 16a ist am besten anhand von **Fig.2a** zu sehen. Dieses Federelement 16a ist bevorzugt derart ausgeführt, dass es den zentralen Bereich 40a der Elastomermembrane 18a gegen den Membranventilsitz 28a mit einer relativ geringen Kraft drängt, die gerade ausreicht, einen Ausgangszustand und eine Ausgangslage der Elastomermembrane 18a zu definieren, wenn keine Betätigung durch Druckmittel vorliegt. Alternativ kann auch auf ein solches Federelement 16a verzichtet werden.

Der Druckmittelströmungskanal 42a, der Membranventilsitz 28a und die Elastomermembrane 18a sind in Bezug zu einer Axialrichtung bzw. Mittelachse 52a koaxial angeordnet, welche auch eine Betätigungsrichtung der Elastomermembrane 18a darstellt, um sie beispielsweise von dem Membranventilsitz 28a abzuheben. Elastomermembrane 18a bedeutet, dass die Membrane bevorzugt vollständig aus einem Elastomer gefertigt und daher elastisch und flexibel ist.

Bei dem Halte- oder Einlassmembranventil 14a der Drucksteuerventilanordnung 7 ist dann die erste Steuerkammer 26a mit einem Ausgang des elektromagnetischen Vorsteuerventils 15a verbunden, welches das Einlass-Vorsteuerventil bildet. Weiterhin sind die zweite Steuerkammer 50a mit einem pneumatischen Kanal des Betriebsbremsventils 9 und der Druckmittelströmungskanal 42a mit dem druckmittelbetätigten Bremszylinder 6 verbunden (**Fig.2a** und **Fig.2c**).

Weiterhin ist vorgesehen, dass ein Innendurchmesser Di des Druckmittelströmungskanals 42a 7,5mm bis 9,5 mm und die Shore-Härte der Elastomermembrane 18a wenigstens 40 Shore A und die kleinste Dicke d der Elastomermembrane 18a wenigstens in dem zentralen Bereich 40a, welcher sich in Bezug zu einer zur Axialrichtung senkrechten Radialrichtung gesehen innerhalb des Membranventilsitzes 28a befindet wenigstens 30% des Innendurchmessers Di des Druckmittelströmungskanals 42a beträgt. Der zentrale Bereich 40a der Elastomermembrane 18a kann auch wie in **Fig.3** gezeigt einen prominenten Zentrierzapfen 54a aufweisen, welcher in Bezug zur ersten Steuerkammer 26a prominent ist und an welchem ein Ende des bevorzugt als Schraubendruckfeder ausgeführten Federelements 16a zentriert ist. Das andere Ende des Federelements 16a wird indes in einer Ausformung der ersten Steuerkammer 26a zentriert bzw. abgestützt. Das Federelement 16a ist bevorzugt ebenfalls koaxial in Bezug zur Mittelachse.

Denn die Anmelderin der vorliegenden Patentanmeldung hat herausgefunden, dass dann einerseits die Material- und Gestaltsteifigkeit der Elastomermembrane 18a insbesondere in dem zentralen Bereich 40a, welcher sich in Bezug zu einer zur Axialrichtung senkrechten Radialrichtung gesehen innerhalb des Membranventilsitzes 28a befindet, groß genug und andererseits der Innendurchmesser Di des Druckmittelströmungskanals 42a klein genug ist, dass die Elastomermembrane 18a unter der bei Drucksteuerventilanordnungen 7 üblichen Druckverhältnissen nicht in den Druckmittelströmungskanal 42a durchknickt oder einbricht. Aber auch in dem radial äußeren Bereich der Elastomermembrane 18a ist wegen der relativ hohen Materialsteifigkeit des Elastomermaterials eine derart hohe Steifigkeit gegeben, dass die Elastomermembrane 18a dort weder einbricht noch einknickt. Dadurch sind eine hohe Lebensdauer sowie auch eine hohe Funktionssicherheit der Elastomermembrane 18a gewährleistet.

Insbesondere ist die Elastomermembrane 18a des Membranventils 14a ohne einen zusätzlichen Stützring ausgeführt, welcher beispielsweise vorgesehen ist, den radial äußeren Bereich der Elastomermembrane 18a zu stützen. Weiterhin ist die Elastomermembrane 18a des Membranventils 14a auch ohne einen zusätzlichen, beispielsweise im zentralen Bereich 40a der Elastomermembrane 18a integrierten Stützteller ausgeführt, wobei der Stützring und der Stützteller aus einem von einem Elastomer verschiedenen Material und beispielsweise aus einem Metall gefertigt sind, wie beispielsweise in der oben genannten DE 10 2008 035 372 A1 beschrieben. Dies resultiert in einer erheblichen Verringerung der Herstellkosten des Membranventils 14a.

Gemäß einer hier nicht gezeigten Ausführungsform ist auch das Auslassmembranventil 14b wie das Einlass- oder Haltemembranventil 14a gemäß **Fig.3** ausgebildet, wobei in diesem Fall aber die erste Steuerkammer 26b mit einem Ausgang des elektromagnetischen Vorsteuerventils 15b (Auslassventil) verbunden ist. Weiterhin sind in diesem Fall die zweite Steuerkammer 50b mit dem druckmittelbetätigten Bremszylinder 6 und der Druckmittelströmungskanal 42b mit der Drucksenke R bzw. 30 verbunden. Analoge oder identische Bauteile des Auslassmembranventils 14b sind mit gleichen Bezugszeichen wie beim Einlass- oder Haltemembranventil 14a bezeichnet, wobei dann anstatt des Buchstabens a der Buchstabe b gesetzt wird (**Fig.2c**). Die Funktion des Auslassmembranventils 14b ergibt sich anhand der obigen Beschreibung zu **Fig.2b**.

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14a/b: Membranventil
- 15a/b: Elektromagnetventil
- 16a/b: Federelement
- 17a/b: Federelement
- 18a/b: Elastomermembrane
- 19a/b: Magnetspulen
- 20a/b: Magnetventilsitze
- 21: Gehäuse
- 22a/b: Magnetanker
- 23: Druckmittelanschluss
- 24: Arbeitsanschluss
- 26a/b: erste Steuerkammer
- 27a/b: Drucksenke
- 28a/b: Membranventilsitz
- 29a/b: Magnetventilsitz
- 30: Drucksenke
- 31: Bypasskanal
- 32: Pfeil
- 34a/b: Randwulst
- 36a/b: Ventildeckel
- 38a: Ventilgehäusegrundkörper
- 40a/b: zentraler Bereich
- 42a/b: Druckmittelströmungskanal
- 46a/b: erste Fläche
- 48a/b: zweite Fläche
- 50a/b: zweite Steuerkammer
- 52a/b: Mittelachse
- 54a/b: Zentrierzapfen
- Di: Innendurchmesser
- d: Dicke
- R: Druckmittelreservoir

## Patentansprüche

1. Membranventil (14a, 14b) mit wenigstens Folgendem:
a) Einer Elastomermembrane (18a, 18b), welche über einen radial äußeren Randwulst (34a, 34b) in oder an einem Ventilgehäuse (21, 38a, 38b, 36a, 36b) gehalten ist und welche mit einem Membranventilsitz (28a, 28b) zusammen wirkt,
b) einer von einer ersten, vom Membranventilsitz (28a, 28b) weg weisenden Fläche (46a, 46b) der Elastomermembrane (18a, 18b) begrenzten und durch Druckmittel be- und entlastbaren ersten Steuerkammer (26a, 26b), wobei bei einer Belastung der ersten Steuerkammer (26a, 26b) durch Druckmittel die Elastomermembrane (18a, 18b) gegen den Membranventilsitz (28a, 28b) gedrängt wird,
c) einer von einer zweiten, von der ersten Fläche (46a, 46b) weg weisenden Fläche der Elastomermembrane (18a, 18b) begrenzten und durch Druckmittel be- und entlastbaren zweiten Steuerkammer (50a, 50b), welche den Membranventilsitz (28a, 28b) umgibt, wobei bei einer Belastung der zweiten Steuerkammer (50a, 50b) durch Druckmittel die Elastomermembrane (18a, 18b) die Tendenz hat, vom Membranventilsitz (28a, 28b) abzuheben und dabei die zweite Steuerkammer (50a, 50b) mit einem Druckmittelströmungskanal (42a, 42b) verbunden wird, an welchem der Membranventilsitz (28a, 28b) endseitig ausgebildet ist, wobei
d) der Druckmittelströmungskanal (42a, 42b), der Membranventilsitz (28a, 28b) und die Elastomermembrane (18a, 18b) in Bezug zu einer Axialrichtung (52a, 52b) koaxial zueinander angeordnet sind, **dadurch gekennzeichnet, dass**
e) ein Innendurchmesser (Di) des Druckmittelkanals (42a, 42b) 7,5mm bis 9,5 mm beträgt, und
f) die Shore-Härte der Elastomermembrane (18a, 18b) wenigstens 40 Shore A beträgt, und
g) die kleinste Dicke (d) der Elastomermembrane (18a, 18b) in einem zentralen Bereich (40a, 40b) der Elastomermembrane (18a, 18b), welcher sich in Bezug zu einer zur Axialrichtung (52a, 52b) senkrechten Radialrichtung gesehen innerhalb des Membranventilsitzes (28a, 28b) befindet, wenigstens 30% des Innendurchmessers des Druckmittelkanals beträgt.

2. Membranventil nach Anspruch 1, **dadurch gekennzeichnet, dass** die Elastomermembrane (18a, 18b) ohne einen zusätzlichen Stützring, welcher vorgesehen ist, einen radial äußeren Bereich der Elastomermembrane (18a, 18b) zu stützen und/oder ohne einen zusätzlichen, im zentralen Bereich (40a, 40b) der Elastomermembrane (18a, 18b) integrierten Stützteller ausgeführt ist, wobei der Stützring und der Stützteller aus einem von einem Elastomer verschiedenen Material gefertigt sind.

3. Membranventil nach einem der vorhergehenden Ansprüche, **dadurch gekennzeichnet, dass** den zentralen Bereich (40a, 40b) der Elsatomermembrane (18a, 18b) infolge von Federkräften gegen den Ventilsitz drängende Federmittel (16a, 16b) vorgesehen sind.

4. Membranventil nach einem der vorhergehenden Ansprüche, **dadurch gekennzeichnet, dass** das Druckmittel durch Druckluft oder durch Hydraulikflüssigkeit gebildet wird.

5. Membranventil nach einem der vorhergehenden Ansprüche, **dadurch gekennzeichnet, dass** die erste Steuerkammer (26a, 26b) und die zweite Steuerkammer (50a, 50b) zusätzlich von dem Ventilgehäuse (21, 38a, 36a, 36b) begrenzt werden.

6. Drucksteuerventilanordnung (7) zur Steuerung des Fluiddrucks in einer druckmittelbetätigten und schlupfgeregelten Bremsanlage eines Fahrzeugs, wobei im Rahmen der Schlupfregelung der Bremsdruck in wenigstens einem Bremszylinder (6) gesteigert, gehalten oder gesenkt wird, wobei
a) in einem Gehäuse (21, 38a, 36a, 36b) der Drucksteuerventilanordnung (7) zwei Membranventile (14a, 14b), ein Halte- oder Einlassmembranventil (14a) und ein Auslass-Membranventil (14b) sowie zwei von einer elektronischen Steuereinrichtung (10) ansteuerbare elektromagnetische Vorsteuerventile (15a, 15b) zum Vorsteuern der Membranventile (14a, 14b) vorgesehen sind, wobei
b) das Halte- oder Einlassmembranventil (14a) in einer Öffnungsstellung Druckmittel in den wenigstens einen Bremszylinder (6) durchsteuert und in einer Schließstellung eine Zufuhr von Druckmittel in den wenigstens einen Bremszylinder (6) unterbindet, und wobei
c) das Auslass-Membranventil (14b) in einer Öffnungsstellung den wenigstens einen Bremszylinder (6) mit einer Drucksenke (30, R) verbindet und in einer Schließstellung die Verbindung zwischen dem wenigstens einen Bremszylinder (6) und der Drucksenke (30, R) sperrt, **dadurch gekennzeichnet, dass**
d) von dem Halte- oder Einlassmembranventil (14a) und dem Auslass-Membranventil (14b) wenigstens das Halte- oder Einlassmembranventil (14a) durch ein Membranventil nach einem der vorhergehenden Ansprüche gebildet wird.

7. Drucksteuerventilanordnung (7) nach Anspruch 6, **dadurch gekennzeichnet, dass** die erste Steuerkammer (26a) des Halte- oder Einlassmembranventils (14a) mit einem Ausgang eines elektromagnetischen Vorsteuerventils (15a) verbunden ist, welches ein Einlass-Vorsteuerventil bildet, und dass die zweite Steuerkammer (50a) des Halte- oder Einlassmembranventils (14a) mit einem pneumatischen Kanal eines Betriebsbremsventils (9) und der Druckmittelströmungskanal (42a) des Halte- oder Einlassmembranventils (14a) mit wenigstens einem druckmittelbetätigten Bremszylinder (6) verbunden sind.

8. Drucksteuerventilanordnung (7) nach Anspruch 6 oder 7, **dadurch gekennzeichnet, dass** auch das Auslass-Membranventil (14b) durch ein Membranventil nach einem der Ansprüche 1 bis 5 gebildet wird.

9. Drucksteuerventilanordnung (7) nach Anspruch 8, **dadurch gekennzeichnet, dass** die erste Steuerkammer (26b) des Auslass-Membranventils (14b) mit einem Ausgang des elektromagnetischen Vorsteuerventils (14b) verbunden ist, welches ein Auslass-Vorsteuerventil bildet, und dass die zweite Steuerkammer (50b) des Auslass-Membranventils (14b) mit wenigstens einem druckmittelbetätigten Bremszylinder (6) und der Druckmittelströmungskanal des Auslass-Membranventils (14b) mit einer Drucksenke (30) oder mit einem Druckmittelreservoir (R) verbunden ist.

10. Drucksteuerventilanordnung (7) nach einem der Ansprüche 6 bis 9, **dadurch gekennzeichnet, dass** die beiden elektromagnetischen Vorsteuerventile (15a, 15b) je eine Magnetspule (19a, 19b) sowie mit Magnetventilsitzen (20a, 20b, 29a, 29b) zusammen wirkende und durch Bestromung der Magnetspulen (19a, 19b) gegen Federmittel (17a, 17b) betätigbare Magnetanker (22a, 22b) aufweisen.

11. Schlupfgeregelte druckmittelbetätigte Bremsanlage eines Fahrzeugs mit wenigstens einer Drucksteuerventileinrichtung nach einem der Ansprüche 6 bis 10, wobei im Rahmen der Schlupfregelung der Bremsdruck in wenigstens einem Bremszylinder (6) gesteigert, gehalten oder gesenkt wird.

## Claims

1. Membrane valve (14a, 14b) having at least the following:
a) an elastomer membrane (18a, 18) which is held by means of a radially outer edge-bead (34a, 34b) in or on a valve housing (21, 38a, 38b, 36a, 36b) and which co-operates with a membrane valve seat (28a, 28b);
b) a first control chamber (26a, 26b) which is delimited by a first surface (46a, 46b) of the elastomer membrane (18a, 18b) that faces away from the membrane valve seat (28a, 28b) and which can be pressurised and depressurised by a pressure medium, such that when the said first control chamber (26a, 26b) is pressurised with pressure medium the elastomer membrane (18a, 18b) is pressed against the membrane valve seat (28a, 28b);
c) a second control chamber (50a, 50b) which is delimited by a second surface of the elastomer membrane (18a, 18b) that faces away from the first surface (46a, 46b), which chamber surrounds the membrane valve seat (28a, 28b) and which can be pressurised and depressurised by a pressure medium, such that when the said second control chamber (26a, 26b) is pressurised with pressure medium the elastomer membrane (18a, 18b) tends to lift clear of the membrane valve seat (28a, 28b) and thereby the second control chamber (50a, 50b) is connected to a pressure medium flow channel (42a, 42b) at the end of which the membrane valve seat (28a, 28b) is formed, wherein
d) the pressure medium flow channel (42a, 42b), the membrane valve seat (28a, 28b) and the elastomer membrane (18a, 18b) are arranged coaxially with one another in relation to an axial direction (52a, 52b), **characterised in that**
e) an inside diameter (Di) of the pressure medium channel (42a, 42b) is 7.5 mm to 9.5 mm, and
f) the Shore hardness of the elastomer membrane is at least 40 Shore A, and
g) the smallest thickness (d) of the elastomer membrane (18a, 18b) in a central area (40a, 40b) of the elastomer membrane (18a, 18b), which central area as viewed in relation to a radial direction perpendicular to the axial direction (52a, 52b) is within the membrane valve seat (28a, 28b), is at least 30% of the inside diameter of the pressure medium channel.

2. Membrane valve according to Claim 1, **characterised in that** the elastomer membrane (18a, 18b) is made without an additional support ring provided in order to support a radially outer area of the elastomer membrane (18a, 18b) and/or without an additional support plate integrated in the central area (40a, 40b) of the elastomer membrane (18a, 18b), the said support ring and support plate being made of a material different from an elastomer.

3. Membrane valve according to either of the preceding Claims, **characterised in that** spring means (16a, 16b) are provided, which press the central area (40a, 40b) of the elastomer membrane (18a, 18b) against the valve seat as a result of spring forces.

4. Membrane valve according to any of the preceding claims, **characterised in that** the pressure medium is compressed air or a hydraulic fluid.

5. Membrane valve according to any of the preceding claims, **characterised in that** the first control chamber (26a, 26b) and the second control chamber (50a, 50b) are additionally delimited by the valve housing (21, 38a, 36a, 36b).

6. Pressure control valve arrangement (7) for controlling the fluid pressure in a pressure-medium-actuated and slip-regulated brake system of a vehicle, wherein during the slip regulation the braking pressure in at least one brake cylinder (6) is increased, held constant or reduced, wherein
a) in a housing (21, 38a, 36a, 36b) of the pressure control valve arrangement (7) two membrane valves (14a, 14b), namely a holding or inlet membrane valve (14a) and an outlet membrane valve (14b) and two electromagnetic pilot control valves (15a, 15b) that can be controlled by an electronic control unit (10) for the pilot control of the membrane valves (14a, 14b) are provided, wherein
b) in its open position the holding or inlet membrane valve (14a) passes pressure medium into the at least one brake cylinder (6) and in its closed position it blocks the supply of pressure medium into the said at least one brake cylinder (6), and wherein
c) in its open position the outlet membrane valve (14b) connects the at least one brake cylinder (6) to a pressure sink (30, R), and in its closed position it blocks the connection between the at least one brake cylinder (6) and the pressure sink (30, R), **characterised in that**
d) of the holding or inlet membrane valve (14a) and the outlet membrane valve (14b), at least the holding or inlet membrane valve (14a) is formed by a membrane valve according to any of the preceding claims.

7. Pressure control valve arrangement (7) according to Claim 6, **characterised in that** the first control chamber (26a) of the holding or inlet membrane valve (14a) is connected to an outlet of an electromagnetic pilot control valve (15a), which forms an inlet pilot control valve, and the second control chamber (50a) of the holding or inlet membrane valve (14a) is connected to a pneumatic channel of a service brake valve (9) and the pressure medium flow channel (42a) of the holding or inlet membrane valve (14a) is connected to at least one pressure-medium-actuated brake cylinder (6).

8. Pressure control valve arrangement (7) according to Claims 6 or 7, **characterised in that** the outlet membrane valve (14b) too is in the form of a membrane valve according to any of Claims 1 to 5.

9. Pressure control valve arrangement (7) according to Claim 8, **characterised in that** the first control chamber (26) of the outlet membrane valve (14b) is connected to an outlet of the electromagnetic pilot control valve (15b), which forms an outlet pilot control valve, and the second control chamber (50b) of the outlet membrane valve (14b) is connected to at least one pressure-medium-actuated brake cylinder (6), and the pressure medium flow channel of the outlet membrane valve (14b) is connected to a pressure sink (30) or to a pressure medium reservoir (R).

10. Pressure control valve arrangement (7) according to any of Claims 6 to 8, **characterised in that** the two electromagnetic pilot control valves (15a, 15b) each comprise a magnetic solenoid (19a, 19b) and a magnetic armature (22a, 22b) which co-operates with respective magnetic valve seats (20a, 20b, 29a, 29b) and which can be actuated against the force of spring means (17a, 17b) by energising the magnetic solenoids (19a, 19b).

11. Slip-regulated, pressure-medium-actuated brake system of a vehicle, with at least one pressure control valve device according to any of Claims 6 to 10, wherein during the slip regulation the braking pressure in at least one brake cylinder (6) is increased, held constant or reduced.

## Revendications

1. Soupape (14a, 14b) à membrane ayant au moins ce qui suit :
a) une membrane (18a, 18b) en élastomère, qui est retenue par un bourrelet (34a, 34b) de bord extérieur radialement dans ou sur un corps (21, 38a, 38b, 36a, 36b) de soupape et qui coopère avec un siège (28a, 28b) de soupape à membrane,
b) une première chambre (26a, 26b) de commande, délimitée par un première surface (46a, 46b), loin du siège (28a, 28b) de la soupape à membrane, de la membrane (18a, 18b) en élastomère et pouvant être chargée par un fluide sous pression et en être déchargée dans lequel, lors d'une charge de la première chambre (26a, 26b) de pression par du fluide sous pression, la membrane (18a, 18b) en élastomère est repoussée sur le siège (28a, 28b) de la soupape à membrane,
c) une deuxième chambre (50a, 50b) de commande, délimitée par une deuxième surface, loin de la première surface (46a, 46b), de la membrane (18a, 18b) en élastomère et pouvant être chargée par du fluide sous pression et en être déchargée, qui entoure le siège (28a, 28b) de la soupape à membrane, dans lequel, lorsque la deuxième chambre (50a, 50b) de commande est chargée par du fluide sous pression, la membrane (18a, 18b) en élastomère a tendance à se soulever du siège (28a, 28b) de la soupape à membrane et à mettre ainsi la deuxième chambre (50a, 50b) de commande en communication avec un conduit (42a, 42b) d'écoulement de fluide sous pression sur lequel le siège (28a, 28b) de la soupape à membrane est constitué du côté de l'extrémité, dans laquelle
d) le conduit (42a, 42b), le siège (28a, 28b) de la soupape à membrane et la membrane (18a, 18b) en élastomère sont disposés co-axialement les uns aux autres par rapport à une direction (52a, 52b) axiale, **caractérisé en ce que**
e) un diamètre (Di) intérieur du conduit (42a, 42b) pour du fluide sous pression va de 7,5 mm à 9,5mm et
f) la dureté Shore de la membrane (18a, 18b) en élastomère est d'au moins 40 Shore A et
g) l'épaisseur (d) la plus petite de la membrane (18a, 18b) en élastomère dans une partie (40a, 40b) centrale de la membrane (18a, 18b) en élastomère, qui se trouve, considérée par rapport à une direction radiale perpendiculaire à la direction (52a, 52b), axiale à l'intérieur du siège (28a, 28b) de la soupape à membrane, représente au moins 30% du diamètre intérieur du conduit pour du fluide sous pression.

2. Soupape à membrane suivant la revendication 1, **caractérisée en ce que** la membrane (18a, 18b) en élastomère est réalisée sans une bague d'appui supplémentaire qui est prévue pour l'appui d'une partie extérieure radialement de la membrane (18a, 18b) en élastomère et/ou sans un plateau d'appui supplémentaire intégré à la partie (40a, 40b) centrale de la membrane (18a, 18b) en élastomère, la bague d'appui et le plateau d'appui étant en un matériau différent d'un élastomère.

3. Soupape à membrane suivant l'une des revendications précédentes, **caractérisée en ce qu'**il est prévu des moyens (16a, 16b) de ressort pressant la partie (40a, 40b) centrale de la membrane (18a, 18b) en élastomère par des forces de ressort sur le siège de la soupape.

4. Soupape à membrane suivant l'une des revendications précédentes, **caractérisée en ce que** le fluide sous pression est constitué d'air comprimé ou de liquide hydraulique.

5. Soupape à membrane suivant l'une des revendications précédentes, **caractérisée en ce que** la première chambre (26a, 26b) de commande et la deuxième chambre (50a, 50b) de commande sont délimitées supplémentairement par le corps (21, 38a, 36a, 36b) de la soupape.

6. Ensemble (7) à soupape de commande de la pression pour la commande de la pression de fluide dans une installation de freinage d'un véhicule actionné par du fluide sous pression et à glissement réglé, dans lequel, dans le cadre du réglage du glissement, on élève, maintient ou abaisse la pression de frein dans au moins un cylindre (6) de frein, dans lequel
a) dans un corps (21, 38a, 36a, 36b) de l'ensemble (7) à soupape de commande de la pression sont prévues deux soupapes (14a, 14b) à membrane, une soupape (14a) à membrane de maintien ou d'entrée et une soupape (14b) à membrane de sortie, ainsi que deux soupapes (15a, 15b) pilotes électromagnétiques pouvant être commandées par un dispositif (10) électronique de commande pour le pilotage des soupapes (14a, 14b) à membrane,
dans lequel
b) la soupape (14a) à membrane de maintien ou d'entrée commande, dans une position d'ouverture, le passage du fluide sous pression dans le au moins un cylindre (6) de frein et interdit, dans une position de fermeture, un envoi de fluide sous pression au au moins un cylindre (6) de frein et dans lequel
c) la soupape (14b) à membrane de sortie met, dans une position d'ouverture, le au moins un cylindre (6) de frein en communication avec un puits (30, R) de pression et dans une position de fermeture, bloque la communication entre le au moins un cylindre (6) de frein et le puits (30, R) de pression **caractérisé en ce que**
d) de la soupape (14a) à membrane de maintien ou d'entrée et de la soupape (14b) à membrane de sortie au moins la soupape (14a) à membrane de maintien ou d'entrée est formée par une soupape à membrane suivant l'une des revendications précédentes.

7. Ensemble (7) à soupape de commande de pression suivant la revendication 6, **caractérisé en ce que** la première chambre (26a) de commande de la soupape (14a) à membrane de maintien ou d'entrée communique avec une sortie d'une soupape (15a) pilote électromagnétique, qui forme une soupape pilote d'entrée, et **en ce que** la deuxième chambre (50a) de commande de la soupape (14a) à membrane de maintien ou d'entrée communique avec un conduit pneumatique d'une soupape (9) de frein de service et le conduit (42a) d'écoulement du fluide sous pression de la soupape (14a) à membrane de maintien ou d'entrée communique avec au moins un cylindre (6) de frein actionné par du fluide sous pression.

8. Ensemble (7) à soupape de commande de pression suivant la revendication 6 ou 7, **caractérisé en ce que** la soupape (14b) à membrane de sortie est formée aussi par une soupape à membrane suivant l'une des revendications 1 à 5.

9. Ensemble (7) à soupape de commande de pression suivant la revendication 8, **caractérisé en ce que** la première chambre (26b) de commande de la soupape (14b) à membrane de sortie communique avec une sortie de la soupape (14b) pilote électromagnétique, qui forme une soupape pilote de sortie, et **en ce que** la deuxième chambre (50b) de la soupape (14b) à membrane de sortie communique avec au moins un cylindre (6) de frein actionné par du fluide sous pression et le conduit de passage de fluide sous pression de la soupape (14b) à membrane de sortie communique avec un puits (30) de pression ou avec un réservoir (R) de fluide sous pression. i

10. Ensemble (7) à soupape de commande de pression suivant l'une des revendications 6 à 9, **caractérisé en ce que** les deux soupapes (15a, 15b) pilotes électromagnétiques ont chacune une bobine (19a, 19b) magnétique, ainsi que des armatures (22a, 22b) d'aimant coopérant avec des sièges (20a, 20b, 29a, 29b) de soupape magnétique et pouvant être actionnés à l'encontre de moyens (17a, 17b) à ressort par alimentation en courant des bobines (19a, 19b) magnétiques.

11. Installation de frein, réglée en glissement et actionnée par fluide sous pression, d'un véhicule ayant au moins un dispositif de soupape de commande de la pression suivant l'une des revendications 6 à 10, dans laquelle, dans le cadre de la régulation du glissement, la pression de frein est élevée, maintenue ou abaissée dans au moins un cylindre (6) de frein.
